(19) Europäisches Patentamt
European Patent Office
Office européen des brevets

(11) **EP 2 426 841 B1**

(12) **EUROPEAN PATENT SPECIFICATION**

(45) Date of publication and mention
of the grant of the patent:
**09.01.2019 Bulletin 2019/02**

(51) Int Cl.:
***H04J 14/02*** *(2006.01)*

(21) Application number: **10305961.4**

(22) Date of filing: **07.09.2010**

(54) **Optical add and/or drop device for an optical network element**

Optische Add- und/oder Drop-Vorrichtung für ein optisches Netzelement

Dispositif d'extraction/insertion optique pour élément de réseau optique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**07.03.2012 Bulletin 2012/10**

(73) Proprietor: **Alcatel Lucent**
**91620 Nozay (FR)**

(72) Inventors:
• **Zami, Thierry**
**91620, NOZAY (FR)**
• **Rocher, Olivier**
**91620, NOZAY (FR)**

(74) Representative: **Nokia EPO representatives**
**Nokia Technologies Oy**
**Karaportti 3**
**02610 Espoo (FI)**

(56) References cited:
**EP-A2- 1 657 953     US-A- 5 930 016**
**US-A1- 2002 015 551**

• **FUKUSHIMA Y ET AL: "Self-Routing Nonblocking WDM Switches Based on Arrayed Waveguide Grating", IEICE TRANSACTIONS ON COMMUNICATIONS, COMMUNICATIONS SOCIETY, TOKYO, JP, vol. E92B, no. 4, 1 April 2009 (2009-04-01), pages 1173-1182, XP001547193, ISSN: 0916-8516, DOI: DOI:10.1587/TRANSCOM.E92.B.1173**
• **BERNASCONI P ET AL: "Optical switch fabrics for ultra-high-capacity IP routers", JOURNAL OF LIGHTWAVE TECHNOLOGY, IEEE SERVICE CENTER, NEW YORK, NY, US, vol. 21, no. 11, 1 November 2003 (2003-11-01), pages 2839-2850, XP011103961, ISSN: 0733-8724, DOI: DOI:10.1109/JLT.2003.819150**

**Description**

**Field of the invention**

The invention relates to the technical field of optical add, drop or add-and-drop devices for optical communication systems, in particular for transparent wavelength switching nodes.

**Background**

Mastery of optical fiber wavelength division multiplexing (WDM) transmission technology is a major factor in meeting the increasing needs of data transfer rates in the transmission of information. The term "transparent" is applied to a transmission system in which the signal remains optical without being converted into an electronic signal when passing through a network routing node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical crossconnects (OXC). In order to construct such devices, subsystems known as Wavelength Selective Switches (WSS) are particularly attractive. WSSs make it possible to create switching nodes having a very flexible configuration with a much simpler structure than when using discrete components, as well as a reduced size and high reliability.

Add and drop devices in WDM network elements refer to subsystems providing add and drop functions, i.e. a capability to make write-accesses and read-accesses to the WDM transport layer. Document US 5 930 016 A (BRORSON STUART DOUGLAS [US] ET AL is directed to an easily upgradable, field reconfigurable optical network node usable in three different optical network architectures. According to the present invention, a WDM point-to-point link end node can be modularly upgraded in the number of wavelength channels or upgraded to a ring network node; both without requiring equipment internal rewiring. in Fig. 11 of Brorson et al., the switchd unit 1104 comprises one separate switch module 1105 for each wavelength (col. 8 li. 36-40). Therefore, an optical path through the switch unit 1104 can only carry an optical signal on a single wavelength corresponding to one switch module 1105. The embodiments of Figs. 14 and 15 do not differ in this respect. Furthermore, the switch unit 1104 of Brorson et al. is not capable of generating optical paths between any one of the transponder-side ports and any one of the AWG-side ports; an optical path can only be generated between the ports of a same switch module 1105, i.e. a very limited choice between 2 ports on each side. Document US 2002/015551 A1 (TSUYAMA ISAO [JP] ET AL) aims at providing an optical switch network of lower loss, lower cost, downsized and superior expandability. To this end, one configuration of the optical switch network according to the present invention comprises a plurality of input ports, a plurality of output ports, a plurality of wavelength converting means provided corresponding to the plurality of input ports, respectively, for each converting a wavelength of light input from each of the input ports, and selecting means for outputting output lights from the plurality of wavelength converting means to particular ports of the output ports, respectively, corresponding to the wavelengths of the output lights. The optical switch network having such a configuration is free of provision of optical branching/coupling devices, therefore it is possible to achieve lower loss, downsized and superior expandability, as compared with conventional distributing and selecting type optical switch networks. According to another configuration of the optical switch network of the present invention, optical switching means for switching directional paths are arranged upstream and downstream of optical branching/coupling means, respectively, thereby enabling a smaller number of distributions at each optical branching/coupling means, to thereby achieve reduction of loss in the optical SW network. Document EP 1 657 953 A2 (FUJITSU LTD [JP]) relates to an optical transmitting apparatus, a method of increasing the number of paths of the apparatus, and an optical switch module for increasing the number of paths of the apparatus and, more particularly, to a technique suitable for use in an optical transmitting apparatus having an optical cross connecting function and an optical add-drop function. As can be seen in Fig 10B, the drop/through wavelengths can be automatically switched and, moreover, an arbitrary add signal light wavelength can be added to an arbitrary add port, and an arbitrary drop signal light wavelength can be dropped to an arbitrary drop port (transponder). The DOADM is a node in which reconnection between the OADM and the transponder does not have to be performed manually. In the case of the DOADM node, for example, as shown in FIG. 10B, each of the add part 6 and the drop part 7 can be constructed in three modes. Specifically, as shown in FIG. 10B, the add part 6 uses the optical transmitters 2 whose transmission wavelength is variable and the multiplexer 13 which can be constructed by (1) an $N \times 1$ wavelength selection switch (WSS), (2) an $N \times 1$ coupler, or (3) combination of an NxN matrix switch 13a and an AWG 13b. In correspondence with the configuration, the drop part 7 uses the optical receiver 3 whose reception wavelength is variable and the wavelength selector 16 which can be constructed by (1) a $1 \times N$ wavelength selection switch (WSS), (2) an $N \times 1$ coupler, or (3) combination of an AWG 16b and an NxN matrix switch 16a. The configurations which can be employed for the add part 6 and the drop part 7 are also similarly applied to the following embodiments.

## Summary

In an embodiment, the invention provides an optical add or drop or add-and-drop device for an optical network element, comprising: a plurality of WDM links each adapted to carry optical signals on a plurality of wavelength channels, and a transponder block, the transponder block comprising: a plurality of transponders each adapted to generate or receive an optical signal on a selected wavelength channel, an optical spatial switching matrix comprising a plurality of transponder-side ports connected to the transponders and a plurality of AWG-side ports, wherein the optical spatial switching matrix is adapted to produce a plurality of optical paths as a function of a configuration state, and an arrayed waveguide grating, the arrayed waveguide grating comprising a plurality of network-side ports, each connected to a respective one of the WDM links, and a plurality of matrix-side ports, each connected to a respective one of the AWG side ports of the optical spatial switching matrix, wherein a passband of the arrayed waveguide grating between a network-side port and a matrix-side port is dependent upon a rank of the network-side port and a rank of the matrix side port, characterized in that the optical spatial switching matrix can be configured to generate transparent optical paths between any one of the transponder-side ports selected as a function of the configuration state, and any one of the AWG-side ports, selected as a function of the configuration state, each transparent optical path adapted to carry optical signals on the plurality of wavelength channels between the selected one of the transponder-side ports and the selected one of the AWG-side ports.

According to embodiments, such devices can comprise one or more of the features below.

In embodiments of an optical drop or add-and-drop device, the transponders of the transponder block comprise optical receivers and the WDM links comprise a WDM drop link connected to a WDM input line of the network element.

In an embodiment, the WDM links comprise a plurality of WDM drop links connected to a corresponding plurality of WDM input lines of the network element, so that optical signals having a same wavelength that are received by different network-side ports of the arrayed waveguide grating from respective WDM drop links are passed to different matrix-side ports. Such arrangement makes it possible to use the same transponder block for receiving optical signals originating from several input lines or input directions of the network element, a property also known as multidirectional drop functionality.

In an embodiment, a plurality of programmable demultiplexers are each arranged between a respective network-side port of the arrayed waveguide grating and the corresponding WDM drop link or WDM input line, each programmable demultiplexer being adapted to pass to the network-side port a plurality of optical signals from the WDM drop link on a selected plurality of wavelength channels.

In an embodiment, a plurality of transponder blocks each include a plurality of optical receivers, an optical spatial switching matrix and an arrayed waveguide grating, wherein at least one of the programmable demultiplexers comprises a plurality of output ports connected to AWG network-side ports of respective transponder blocks, the programmable demultiplexer being adapted to pass to each said AWG network-side port a plurality of optical signals on a selected plurality of wavelength channels. Such arrangement of plural transponder blocks makes it possible to provide redundant operations to remedy a failure of components within a transponder block and/or to avoid contention among plural client signals for a given receiver or optical path, property also known as contentionless drop functionality.

In embodiments of an optical add or add-and-drop device, the transponders of the transponder block comprise optical transmitters and the WDM links comprise a WDM add link connected to a WDM output line of the network element.

In an embodiment, the WDM links comprise a plurality of WDM add links connected to a corresponding plurality of WDM output lines of the network element, so that optical signals having a same wavelength that are received by different matrix-side ports of the arrayed waveguide grating from respective optical transmitters are passed to different network-side ports and the respective WDM add links. Such arrangement makes it possible to use the same transponder block for transmitting optical signals to several output lines or output directions of the network element, a property also known as multidirectional add functionality.

In an embodiment, a plurality of programmable multiplexers are each arranged between a respective network-side port of the arrayed waveguide grating and the corresponding WDM add link or WDM output line, each programmable multiplexer being adapted to pass to the WDM add link a plurality of optical signals from the transponder block on a selected plurality of wavelength channels.

In an embodiment, a plurality of transponder blocks each include a plurality of optical transmitters, an optical spatial switching matrix and an arrayed waveguide grating, wherein at least one of the programmable multiplexers comprises a plurality of input ports connected to AWG network-side ports of respective transponder blocks, the programmable multiplexer being adapted to pass to the WDM add link a plurality of optical signals from each said respective transponder block on a selected plurality of wavelength channels. Such arrangement of plural transponder blocks makes it possible to provide redundant operations to remedy a failure of components within a transponder block and/or to avoid contention among plural client signals for a given transmitter or optical path, a property also known as contentionless add functionality.

In embodiments of an optical add-and-drop device, the transponders of the transponder block comprise a plurality of transponder pairs connected to respective transponder-side ports of the optical spatial switching matrix, each transponder pair comprising an optical transmitter, an optical receiver and a directional optical component arranged to separate an optical signal transmitted to the optical spatial switching matrix from an optical signal received from the optical spatial switching matrix, and the optical transmitter and optical receiver of a pair are tuned to different wavelength channels, e.g. tuned fixedly or in a reconfigurable manner, wherein the WDM links comprise a WDM drop link connecting an input network side-port of the AWG to a WDM input line of the network element and a WDM add link connecting an output network side-port of the AWG to a WDM output line of the network element. Such arrangement provides a bidirectional transponder block that uses the AWG and OSSM bidirectionally to route both added signals and dropped signals from and to transponders.

In an embodiment, the WDM links comprise a plurality of WDM drop links connected to a corresponding plurality of WDM input lines of the network element, the optical add-and-drop device further comprising a programmable multiplexer arranged between the input network-side port of the arrayed waveguide grating and the WDM drop links and adapted to pass to the input network-side port a plurality of optical signals from each said WDM drop link on a selected plurality of wavelength channels. Such arrangement makes it possible to use the same transponder block for receiving optical signals originating from several input lines or input directions of the network element, a property also known as multidirectional drop functionality.

In an embodiment, the directional optical component is selected in a group comprising optical circulators and optical isolators.

In an embodiment, the optical add-and-drop device further comprises a bidirectional client card comprising an intermediate-layer receiver connected to a receiver of the transponder block to receive an intermediate-layer drop signal and an intermediate-layer transmitter connected to a transmitter of the transponder block to transmit an intermediate-layer add signal thereto, wherein said receiver and transmitter of the transponder block to which the bidirectional client card is connected belong to different transponder pairs and are tuned to a same wavelength of the WDM layer.

In embodiments, one or each of the WDM drop links and/or WDM add links comprises a wideband optical amplifier to amplify the dropped or added signals. In an embodiment, a wavelength blocker module is arranged on the WDM link to equalize a power spectrum of the optical signals upstream of the optical amplifier.

In embodiments, the AWGs of the transponder blocks may be of a cyclic type or a noncyclic type.

In embodiments, the optical receivers may include quadratic receivers with a fixed or tunable reception wavelength. Alternatively, the optical receivers may comprise tunable coherent receivers which can be tuned to any wavelength channel by adapting the frequency of a local oscillator. Coherent receivers may be preferred for transmissions employing very high efficiency modulation schemes such as quadratic phase shift keying with polarization division multiplexing (PDM-QPSK) or others.

In embodiments, the optical transmitters may operate with a fixed or tunable wavelength.

Aspects of the invention are based on the idea of equipping optical network elements with add and drop functions that fulfill multiple requirements such as:

- Flexible operations, e.g. multidirectional, contentionless and/or colorless operations,
- Suitability for high datarate signals, especially low impact on physical quality of signals,
- Progressive scalability or suitability for pay-as-you-grow deployment,
- High capacity,
- Cost-efficiency.

Aspects of the invention are based on the idea of creating a low-loss transponder block with multiple network-side ports by combining an optical spatial switching matrix, e.g. bases on MEMS technology, with an NxM arrayed waveguide grating.

**Brief description of the drawings**

These and other aspects of the invention will be apparent from and elucidated with reference to the embodiments described hereinafter, by way of example, with reference to the drawings.

Figure 1 is a functional representation of a drop device according to an embodiment of the invention.
Figure 2 is a functional representation of a cyclic AWG which may be used in a transponder block.
Figure 3 is a functional representation of a noncyclic AWG which may be used in a transponder block.
Figure 4 is a functional representation of a degree-3 optical switching node in which embodiments of an add device and a drop device are implemented.
Figure 5 is a functional representation of a degree-3 optical switching node in which a further embodiment of a drop device is implemented.

Figure 6 is a functional representation of a bidirectional add-and-drop device according to an embodiment of the invention.

Figure 7 is a functional representation of a degree-3 optical switching node in which the add-and-drop device of figure 6 is implemented.

Figure 8 is a functional representation of a degree-3 optical switching node in which a further embodiment of an add-and-drop device is implemented.

Figure 9 shows an arrangement for connecting a bidirectional add-and-drop device to client-side transponders.

**Detailed description of the embodiments**

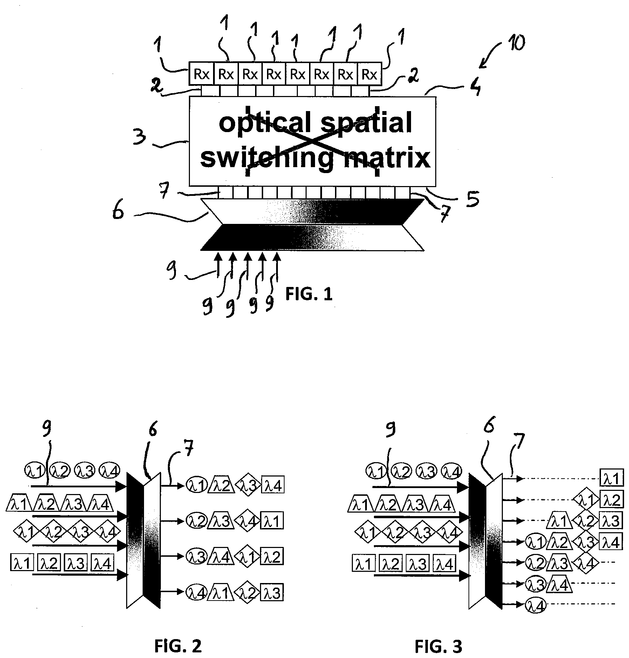

With reference to Figure 1, an embodiment of an optical drop device 10 for a WDM optical network node is shown. The drop device comprises optical receivers 1, for example coherent receivers, intended to demodulate optical signals modulated with data to provide the data to client devices, not shown. The client devices refer to any system that interfaces with the WDM network to receive information signals transported by the WDM network, i.e. to make a read access to the WDM layer, including for example an electronic switch intended to transfer the information signals to a further network.

With a coherent receiver, it is possible to select a wavelength channel to be demodulated among a plurality of superimposed wavelength channels by finely tuning a monochromatic local oscillator. Therefore, at least in the case where coherent receivers are used, the corresponding optical input line 2 connected to the coherent receiver 1 may carry a single wavelength channel, i.e. a colored optical signal, or a plurality of superimposed wavelength channels, i.e. a WDM optical signal.

To route the optical signals to the receivers 1, an optical spatial switching matrix 3 (OSSM) is provided. The OSSM 3 comprises output ports on the transponder-side 4 and input ports on the opposite side 5. The OSSM 3 is a configurable non-blocking space switch that can be configured to generate transparent optical paths between any of its input ports and any of its output ports to pass colored or WDM optical signals independently of the wavelength thereof, within a given spectral window of course. Each input line 2 is connected to a respective output port of the OSSM 3. The OSSM 3 may be implemented with diverse technologies, e.g. MEMS-operated reflectors. Suitable MEMS-based OSSMs are available from manufacturers such as Calient Technologies or CrossFiber Inc.

The input ports of the OSSM 3 are connected by optical lines 7 to an arrayed waveguide grating (AWG) 6. The AWG 6 comprises a plurality, say N, of input ports and a plurality, say M, of output ports, with M=N or M>N. Each optical line 7 connects an output port of the AWG 6 to an input port of the OSSM 3. A plurality of WDM lines 9 are connected to the input ports of AWG 6 to bring the optical signals to be dropped from the WDM layer of an optical node, as will be illustrated further below.

The AWG operates to route the optical signals from its inputs ports to its output ports as a function of (i) a wavelength channel of each signal and (ii) a rank of the port in which the optical signal is inputted. Therefore, for each colored optical signal carried by a WDM line 9, the position of the receiver 1 that will receive the optical signal depends on (i) the wavelength channel of the signal, (ii) the rank of the input port corresponding to the WDM line 9 and the configuration of the OSSM 3, namely to which transponder-side port the OSSM 3 connects the AWG output port that corresponds to (i) and (ii).

Not necessarily all output ports of the OSSM 3 are connected to a receiver 1, as some ports can be kept unused, e.g. to allow for future growth of the drop device capacity. For similar reasons, not necessarily all of the input ports of the AWG 6 are connected to input lines 9.

The AWG 6 may be cyclic or noncyclic. The wavelength routing principle of a cyclic AWG is illustrated in figure 2. The wavelength channels on a predefined frequency grid are referred to as $\lambda k$, k=1, 2, 3, 4. To distinguish signals having a same wavelength, each signal is represented by a symbol that differs from one WDM line 9 to the other. The wavelength routing principle of a noncyclic AWG is illustrated in figure 3 using similar conventions.

The passband $P(i, j)$ between a rank-i input port and a rank-j output port can each time be defined by a rule of the type:

$$P(i, j) = \lambda 0 + \{(i - I) + (j - J)\} \Delta\lambda \qquad (\text{Eq. 1})$$

where I and J refer to the rank of a center input and output port respectively and $\Delta\lambda$ is the channel spacing of the AWG. The channel spacing of the AWG $\Delta\lambda$ should correspond to that of the frequency grid of the WDM network in which the drop device is used, so that the passband $P(i, j)$ corresponds each time to a single channel of the grid.

Further aspects of cyclic and noncyclic AWGs are detailed in Optical Switch Fabrics for Ultra-High-Capacity IP Routers, J. Gripp at al., Journal of Lightwave Technology, Vol. 21, No 11, 2003; section V, pp 2840-2842. Suitable AWGs with 4, 8, 16, 24 and 32 wavelength channel capability are available for manufacturer Enablence Technologies Inc.

The drop device 10 of Figure 1 can be designed with relatively low power losses between an input line 9 and a receiver 1, namely for example about -4dB in the OSSM 3 and -10 to -13 dB in the AWG 6. Noncyclic AWGs can be preferred due to lower losses, at the expense of a slightly higher number of ports. For example, if the drop device is intended to receive 96 channels from each of 8 WDM lines 9, a total number of output ports of the AWG 6 will be 103 in the noncyclic case vs. 96 in the cyclic case.

A similar add device can be designed by substituting the receivers 1 with transmitters in the drop device 10 and using the OSSM 3 and AWG 6 in the opposite direction. As both the optical properties of OSSM 3 and AWG 6 are the same in both directions, the operation of such add device can be directly deduced from the above description of drop device 10. In particular, for a wavelength channel emitted by a transmitter at the transponder side 4 of the OSSM 3, the rank of the WDM line 9 that such signal will reach, if any, depends both on the configuration of the OSSM 3 and the wavelength. The low losses are also beneficial in such an add device.

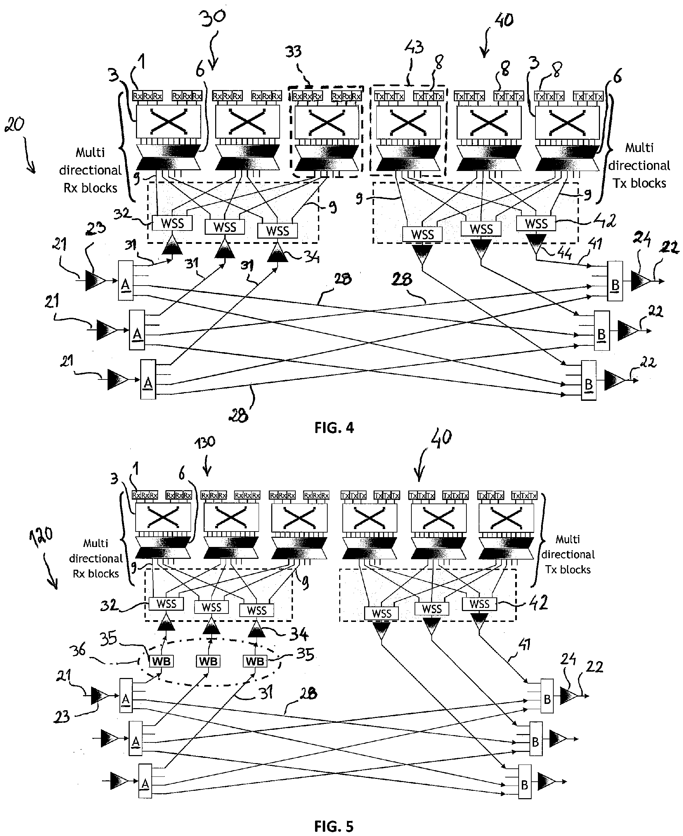

With reference to Figure 4, an optical transparent switching node 20 equipped with a multidirectional drop device and a multidirectional add device will now be described.

The optical node 20 as shown has a degree-3 connectivity, namely it has three WDM input lines 21 and three WDM output lines 22 and can be connected bidirectionally with three respective neighboring nodes in a transparent network. The optical node 20 can be used in a transparent network or transparent network island with any topology, e.g. mesh, ring, star, tree and others. The same node architecture could be used for a different, higher or lower degree.

As shown, each WDM input line 21 may comprise an optical amplifier 23 and each WDM output line 22 may comprise an optical amplifier 24 to compensate for the losses of the node components.

Each input line 21 is connected to send the WDM traffic to a respective distributing component A, that may be a power splitter or a Wavelength Selective Switch (WSS). Each output line 22 is connected to receive WDM traffic from a merging component B, which may be a power splitter or a Wavelength Selective Switch (WSS). At least one of components A and B must be wavelength selective to avoid that a given output line 22 receives several signals carried by the same wavelength channel, i.e. so-called spectral collisions. Between the components A and B, a plurality of transit lines 28 are connected to pass transit traffic from any of the input lines 21 to any of the output lines 22, although it is ordinarily not necessary to provide a transit line between a pair of input and output lines that connect to a same neighboring node.

In a preferred embodiment, the components A are power splitters whereas the components B are WSSs, an architecture known as broadcast-and-select.

The multidirectional drop device 30 of the node will now be described. The drop device 30 receives signals to be dropped from each of the components A by a respective WDM drop line 31. When components A are power splitters, the WDM lines 31 pass actually all the incoming traffic to the drop device. Each drop line 31 is connected to the shared port of a respective WSS 32 used as a programmable demultiplexer. Each WSS 32 is configured to block signals that are not to be dropped, as a function of their wavelengths, and to pass signals to be dropped to one of three multidirectional receiver blocks 33, as a function of their wavelengths. A multidirectional receiver block 33 has a similar structure to the drop device 10 of Figure 1. Like numerals are used for like elements.

A wavelength selective switch (WSS) refers to a piece of equipment that may be used as a reconfigurable multiplexer or a reconfigurable demultiplexer. When it is acting as a demultiplexer, a plurality of selectable ports serve as outputs, and a shared port serves as a common input. The wavelength selection switch is capable of switching each wavelength channel received at the input to a selected output of that piece of equipment, based on a control signal sent by a control unit not shown. This piece of equipment thereby carries out a reconfigurable demultiplexing function on wavelength channels whose optical frequencies are aligned with one or more predetermined frequency grids. It makes it possible to pass, to each output, one channel, multiple channels, or no channel, selected from among the channels received at the shared input.

The switching of channels within the WSS is produced by spatial light manipulation organs, such as micromirrors activated by MEMS micro-actuators or liquid crystal cells. In addition to selecting the channels, these organs may be capable of adjusting the signal attenuation for each wavelength channel. In this manner, each WSS 32 serves to both select the wavelength channels that must be dropped from a given input line 21 and to adjust their output power channel-by-channel towards the receiver blocks 33.

The WDM lines 9 each connect an output of one WSS 32 to an input of one receiver block 33. Hence, each receiver block 33 can receive optical signals to be dropped from each WSS 32, hence from each input line 21. Therefore each receiver block 33 provides multidirectional operations.

Within a receiver block 33 in the embodiment shown, given that a single receiver 1 is connected per transponder-side port of the OSSM 3, at most one optical signal to be dropped should reach each output port of the AWG 6 at any given instant. This condition implies a coordinated configuration of the multiple WSSs 32. In other words, since each WSS 32 is connected to a respective input of the AWG 6 and is able to send a respective optical signal to that input, a difference in the wavelengths of the respective optical signals sent by different WSSs 32 should not compensate exactly a difference in the ranks of the respective AWG inputs in the sense of Eq. 1 above. Otherwise, the respective optical signals will add to a same output of the AWG and reach a same receiver 1 that cannot possibly demodulate multiple channels simultaneously. For the sake of illustration, compensation in the sense of Eq. 1 may be obtained for example by sending a channel $\lambda_2 = \lambda_1 + \Delta\lambda$ to the input port of rank 1 while sending the channel $\lambda_1$, to the input port of rank 2. In such case, both channels may reach the same AWG output.

The above condition will be referred to as single-wavelength-per-output condition. This condition may prevent a WSS 32 from sending a signal to be dropped to a given receiver block 33. However, if the receiver blocks 33 are provided in a sufficient size and number, a statistical risk of wavelength contention can be reduced below an acceptable level, so that a WSS 32 will find a suitable receiver block 33 in all or most cases.

The single-wavelength-per-output condition may be actually avoided in alternative embodiments (not shown), e.g. wherein several coherent receivers are coupled to a same transponder-side port of the OSSM 3 through an additional power splitter.

In an embodiment, the dimensioning of the drop device 30 is made as follows: a number of the receiver blocks 33 is equal to the number of the input lines 21 from which traffic to be dropped must be received, i.e. 3 in figure 4. A number of receivers per receiver block may be lower or equal to the number of wavelength channels used in the network, e.g. 96. It is assumed that the same frequency grid is used on all input and output lines 21 and 22. The number of wavelength channels used in the network refers to the number of carrier frequencies in such frequency grid.

Alternatively, a number of receivers per block can be lower depending on the actual drop capacity needed, i.e. number of channels to be dropped simultaneously at any point in time. Moreover, a drop capacity can be scaled progressively by connecting additional receivers to previously unused OSSM ports of a receiver block and/or by connecting additional receiver blocks to previously unused ports of the WSSs 32.

In the drop device 30 of Figure 4, the WSS 32 adds power losses in the drop path in the amount of about -8 dB. To compensate for the losses, optical amplifiers such as EDFAs can be provided in the drop path, e.g. on each drop line 31 as shown at numeral 34.

Figure 5 shows an optical switching node 120 with a modified drop device 130. Drop device 130 differs from drop device 30 in that a wavelength blocker (WB) 35 is mounted on each drop line 31 in front of the optical amplifiers 34, as shown in circled area 36. The wavelength blockers 35 are configured to flatten the power spectrum of the optical signals before they enter the amplifiers 34, i.e. so as to compensate for the power imbalance of the channels. Suitable wavelength blockers are available e.g. from manufacturer Nistica Inc.

On the one hand, a consequence of the WB 25 is a reduction of the input channel power in the EDFA 34, e.g. in the amount of -6 dB. Thus, the optical signal-to-noise ratio (OSNR) at the output of EDFA 34 will be degraded by -6 dB. However, as long as the channels to be dropped do not suffer too much insertion losses between the optical amplifiers 23 located just at the WDM input of the node and the EDFA 34, e.g. no more than -18 dB in total, the corresponding OSNR will remain high enough, e.g. higher than 33 dB/0.1 nm assuming that the amplifier 23 is a 23 dBm output optical amplifier. On the other hand, an advantage of the WB 35 is the capability to obtain a perfectly flat WDM comb at the input of EDFA 34. Hence, provided that EDFA 34 has a flat spectral gain, the channel power spread at the output of EDFA 34 may be narrow, e.g. within a 1 dB range. This limited spread makes it possible to improve the smallest channel power by several dB compared to a situation where unbalanced channels are directly fed into the amplifiers 34.

An alternative embodiment of the drop devices 30 and 130 consists in using WSSs having plural drop ports as the components A on each WDM input of the node, and providing the plural WDM lines 9 directly between a receiver block and a respective drop port of each WSS A. In such embodiment, the WSSs A operate both to separate signals to be dropped from transit signals and to distribute the signals to be dropped to the plural multidirectional receiver blocks 33, so that the WSSs 32 can be suppressed.

The optical switching nodes of Figures 4 and 5 are also equipped with an add device 40 that will now be described.

The optical add device 40 is constructed similarly the optical drop device 30, with the differences that:

- a transmitter block 43 is constructed as a receiver block 33, in which receivers 1 are replaced by optical transmitters 8,
- OSSM 3, AWG 6 and WSS 42 operate to pass optical signals in the reverse direction,
- EDFAs 44 mounted on add lines 41 amplify signals towards the output lines 22 of the node,

  - and each add line 41 connects a respective WSS 42 to a respective component B so as to add traffic on the corresponding output line 22.

The add device 40 is adapted to provide multidirectional operations. Again, an alternative embodiment of the add device 40 consists in using WSSs having plural add ports as the components B on each WDM output of the node, and providing the plural WDM lines 9 directly between a transmitter block and a respective add port of each WSS B. In such embodiment, the WSSs B operate both to merge signals to be added from the plural multidirectional transmitter blocks 43 and to merge signals to be added with transit signals, so that the WSSs 42 can be suppressed.

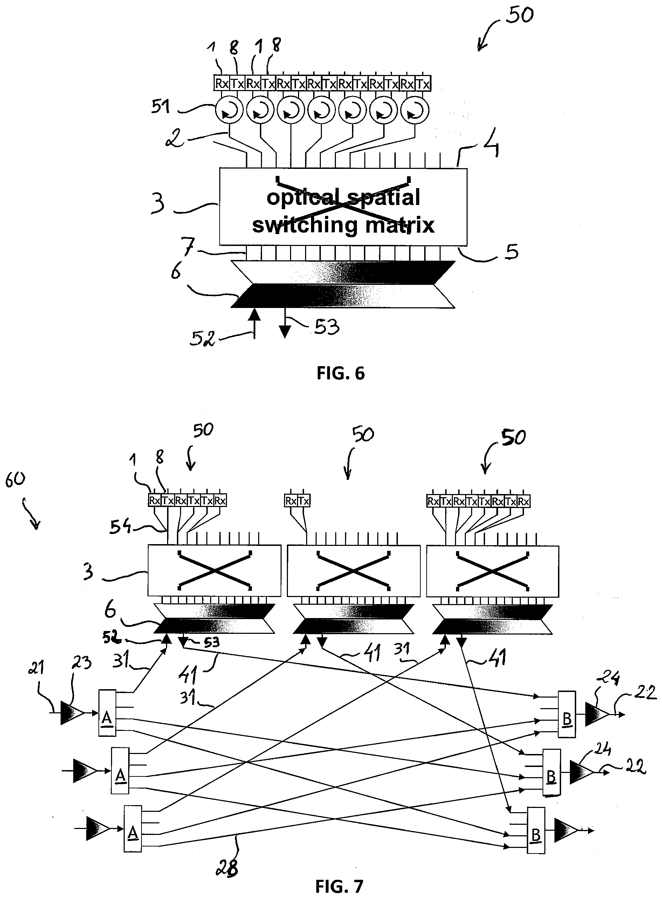

With reference to Figure 6, an embodiment of an optical add-and-drop device 50 for a WDM optical network node will now be described. The add-and-drop device 50 operates similarly to both a drop device 10 and an add device 40. Thus, like numerals will designate like elements.

In the add-and-drop device 50, the OSSM 3, the AWG 6 and optical lines 2 and 7 are employed bidirectionally to pass optical signals both from an input port 52 of the AWG 6 to multiple optical receivers connected to the transponder-side 4 of the OSSM 3, and from multiple optical transmitters 8 connected to the transponder-side 4 of the OSSM 3 to an output port 53 of the AWG 6. In the embodiment shown, each transponder-side OSSM port is connected to a pair of a receiver 1 and a transmitter 8 through an optical circulator 51. In a variation shown on Figure 7, the optical circulator 51 may be replaced with a 1x2 power splitter 54 and an optical isolator (not shown) arranged between the power splitter 54 and the transmitter 8.

For the drop operations, an optical signal to be dropped reaches the add-and-drop device 50 at input port 52, passes to an output port of the AWG 6 as a function of the wavelength channel and passes through the OSSM 3 to a receiver 1. For the add operations, an optical signal transmitted by the transmitter 8 of the same pair than the receiver will pass through the OSSM 3 in the reverse direction along the same optical path in the OSSM 3. Since the signal to be added must reach the output port 53, it cannot have the same wavelength as that of the dropped signal. In other words, a receiver 1 and a transmitter 8 within a pair must be tuned to different wavelength channels of the WDM layer. This feature has the advantage that any backscattering of the added signal in the OSSM 3 will have a different wavelength from the dropped signal, so that the resulting crosstalk is out-of-band crosstalk, which has a much lower impact on the dropped signal than in-band crosstalk that would result from using the same wavelength.

With reference to Figure 7, an optical transparent switching node 60 equipped with directional add-and-drop devices will now be described.

In the embodiment of Figure 7, a respective add-and-drop device 50 is arranged as a directional add-and-drop device for each of three transmission directions of the optical node. Elements similar to those of Figure 4 are designated by the same numeral. For each add-and-drop device 50, the input port 52 is connected by a respective drop line 31 to a port of the corresponding component A, namely a WSS, and the output port 53 is connected by a respective add line 41 to a port of the corresponding component B, namely a power splitter or WSS.

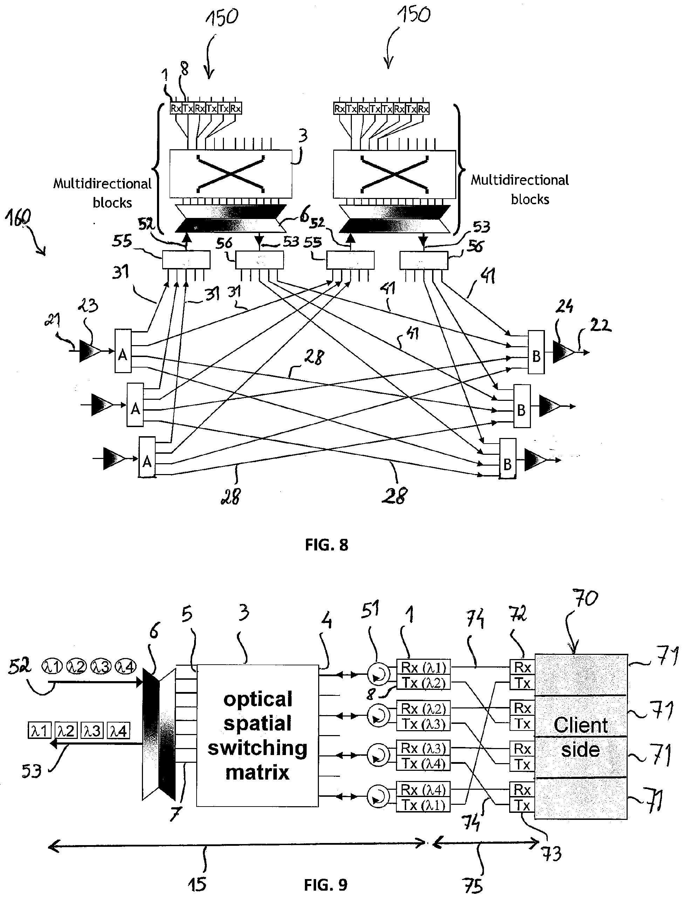

With reference to Figure 8, an optical transparent switching node 160 equipped with multidirectional add-and-drop devices will now be described.

In the optical node 160 of Figure 8, two redundant multidirectional add-and-drop devices 150 are provided. A multidirectional add-and-drop device 150 differs from the add-and-drop device 50 by the fact that:

- A merging component 55, e.g. a WSS or power splitter, is connected to a plurality of drop lines 31 from each of the components A corresponding to the respective input lines 21, to receive signals to be dropped from all input lines 21. The merging component 55 passes all those signals to the input port 52. When the components A are power splitters, the merging component 55 should be a WSS.
- A distributing component 56, e.g. a WSS or power splitter, is connected to a plurality of add lines 41 towards each of the components B corresponding to the respective output lines 22, to pass signals to be added to all output lines 22. The distributing component 56 receives all those signals from the output port 53. When the components B are power splitters, the distributing component 56 should be a WSS.

With reference to Figure 9, an arrangement for connecting the add-and-drop device 50 or 150 to a client-side apparatus 70 will now be described. Elements similar to those of Figure 6 are designated by the same numerals.

On the input port 52, circles symbolize optical signals to be dropped having a respective wavelength as indicated in the circle. These signals are received and demodulated by the respective optical receivers 1. On the output port 53, squares symbolize optical signals to be added having a respective wavelength as indicated in the square. These signals are generated and sent by the respective optical transmitters 8. The wavelengths indicated in the receivers 1 and transmitters 8 show how the receivers 1 and transmitters 8 may be tuned to achieve that result. There may be other suitable ways as well.

On the right-hand side of the figure, a client apparatus 70 is functionally depicted. The client apparatus 70 refers to a data processing apparatus that uses the WDM network (not shown), to which the add-and-drop device is connected to exchange data flows with similar apparatuses connected to remote optical nodes.

The client apparatus 70 typically employs an intermediate transmission layer 75 to communicate with the transponders 1 and 8 of the WDM layer 15. Namely, a WDM receiver 1 operates to convert a received optical signal from a format of the WDM layer 15 to a format of the intermediate layer 75 and a WDM transmitter 8 operates to convert a received optical signal from the format of the intermediate layer 75 to the format of the WDM layer 15. The intermediate layer may employ monochromatic optical transmissions, also known as black-and-white transmissions or grey transmissions. The client apparatus 70 typically comprises a plurality of bidirectional client cards 71 each comprising an intermediate-layer receiver 72 and an intermediate-layer transmitter 73. In this manner, a given client card 71 handles related data flows in both directions, e.g. from and to a given end-user. In a preferred embodiment, a client card 71 is allocated the same wavelength in the WDM layer for reception and transmission. Such regular allocation can be achieved by the arrangement of the intermediate lines 74 as shown on Figure 9, which connect the intermediate-layer transponders 72 and 73 of any given client card 71 to a WDM receiver 1 and a WDM transmitter 8 that are tuned or allocated to the same wavelength. Again, a WDM-layer receiver 1 and a WDM-layer transmitter 8 within a pair must be tuned to different wavelength channels of the WDM layer, since the dropped optical signal and the added optical signal having the same wavelength must pass through different network side ports 52 and 53 of the AWG. This implies that the intermediate-layer transponders 72 and 73 of any given client card 71 are connected to a WDM receiver 1 and a WDM transmitter 8 that belong to different pairs of WDM-layer transponders. In other words, the pairing of transponders 72 and 73 on the client side is offset with respect to the pairing of transponders 1 and 8 in the add-and-drop device. In the example depicted, the offset value is one pair.

The intermediate lines 74 can be made of optical fibers. In a modified embodiment not shown, an additional optical spatial switch is provided in the intermediate layer 75 between the client apparatus 70 and the WDM transponders to perform those connections in a reconfigurable manner.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

In the claims, any reference signs placed between parentheses shall not be construed as limiting the scope of the claims.

## Claims

1. An optical add (40) or drop (30, 130) or add-and-drop (50, 150) device for an optical network element (20, 120, 60, 160), comprising:

   a plurality of WDM links (9, 31, 41) each adapted to carry optical signals on a plurality of wavelength channels, and a transponder block (33, 43, 50), the transponder block comprising:

      a plurality of transponders (1, 8) each adapted to generate or receive an optical signal on a selected wavelength channel,
      an optical spatial switching matrix (3) comprising a plurality of transponder-side ports (4) connected to the transponders and a plurality of AWG-side ports (5), wherein the optical spatial switching matrix is adapted to produce a plurality of optical paths as a function of a configuration state, and
      an arrayed waveguide grating (6), the arrayed waveguide grating comprising

         a plurality of network-side ports connected to the plurality of WDM links (9, 31, 41), and
         a plurality of matrix-side ports connected to the plurality of AWG-side ports (5), wherein a passband of the arrayed waveguide grating between a network-side port and a matrix-side port is dependent upon a rank of the network-side port and a rank of the matrix-side port,

      **characterized in that** the optical spatial switching matrix can be configured to generate transparent optical paths between any one of the transponder-side ports selected as a function of the configuration state, and any one of the AWG-side ports, selected as a function of the configuration state, each transparent optical path adapted to carry optical signals on the plurality of wavelength channels between the selected one of the transponder-side ports and the selected one of the AWG-side ports.

2. An optical drop or add-and-drop device (30, 130, 50, 150) in accordance with claim 1, wherein the transponders of the transponder block comprise optical receivers (1) and the WDM links comprise a WDM drop link (31) connected to a WDM input line (21) of the network element.

3. An optical drop or add-and-drop device in accordance with claim 2, wherein the WDM links comprise a plurality of WDM drop links (31) connected to a corresponding plurality of WDM input lines (21) of the network element, so that optical signals having a same wavelength that are received by different network-side ports of the arrayed waveguide grating (6) from respective WDM drop links are passed to different matrix-side ports.

4. An optical drop or add-and-drop device in accordance with claim 3, further comprising a plurality of programmable demultiplexers (32, A) each arranged between a respective network-side port of the arrayed waveguide grating (6) and the corresponding WDM input line (21), each programmable demultiplexer being adapted to pass to the network-side port a plurality of optical signals from the WDM drop link on a selected plurality of wavelength channels.

5. An optical drop or add-and-drop device in accordance with claim 4, further comprising a plurality of transponder blocks (33, 50) each including a plurality of optical receivers, an optical spatial switching matrix and an arrayed waveguide grating, wherein at least one of the programmable demultiplexers (32) comprises a plurality of output ports connected to AWG network-side ports of respective transponder blocks, the programmable demultiplexer being adapted to pass to each said AWG network-side port a plurality of optical signals on a selected plurality of wavelength channels.

6. An optical add or add-and-drop device (40, 50, 150) in accordance with claim 1, wherein the transponders of the transponder block (43, 50) comprise optical transmitters (8) and the WDM links comprise a WDM add link (41) connected to a WDM output line (22) of the network element.

7. An optical add or add-and-drop device in accordance with claim 6, wherein the WDM links comprise a plurality of WDM add links (41) connected to a corresponding plurality of WDM output lines (22) of the network element, so that optical signals having a same wavelength that are received by different matrix-side ports of the arrayed waveguide grating from respective optical transmitters are passed to different network-side ports and the respective WDM add links.

8. An optical add or add-and-drop device in accordance with claim 7, further comprising a plurality of programmable multiplexers (42, B) each arranged between a respective network-side port of the arrayed waveguide grating and the corresponding WDM output line (22), each programmable multiplexer being adapted to pass to the WDM add link a plurality of optical signals from the transponder block (43) on a selected plurality of wavelength channels.

9. An optical add or add-and-drop device in accordance with claim 8, further comprising a plurality of transponder blocks (43) each including a plurality of optical transmitters (8), an optical spatial switching matrix (3) and an arrayed waveguide grating (6), wherein at least one of the programmable multiplexers (42) comprises a plurality of input ports connected to AWG network-side ports of respective transponder blocks, the programmable multiplexer being adapted to pass to the WDM add link a plurality of optical signals from each said respective transponder block on a selected plurality of wavelength channels.

10. An optical add-and-drop device (50, 150) in accordance with claim 1, wherein the WDM links comprise a WDM drop link (31) connecting an input network side-port (52) of the AWG to a WDM input line (21) of the network element and a WDM add link (41) connecting an output network side-port (53) of the AWG to a WDM output line (22) of the network element,
wherein the transponders of the transponder block comprise a plurality of transponder pairs connected to respective transponder-side ports of the optical spatial switching matrix, each transponder pair comprising an optical transmitter (8), an optical receiver (1) and a directional optical component (51, 54) arranged to separate an optical signal transmitted to the optical spatial switching matrix from an optical signal received from the optical spatial switching matrix,
and wherein the optical transmitter and optical receiver of a pair are tuned to different wavelength channels.

11. An optical add-and-drop device in accordance with claim 10, wherein the WDM links comprise a plurality of WDM drop links (31) connected to a corresponding plurality of WDM input lines of the network element, the optical add-and-drop device further comprising a programmable multiplexer (55) arranged between the input network-side port (52) of the arrayed waveguide grating and the WDM drop links (31) and adapted to pass to the input network-side port a plurality of optical signals from each said WDM drop link on a selected plurality of wavelength channels.

12. An optical add-and-drop device in accordance with one of claims 10 to 11, wherein the directional optical component is selected in a group comprising optical circulators (51) and optical isolators.

13. An optical add-and-drop device in accordance with one of claims 10 to 12, further comprising a bidirectional client card (71) comprising an intermediate-layer receiver (72) connected to a receiver of the transponder block (50) to receive an intermediate-layer drop signal and an intermediate-layer transmitter (73) connected to a transmitter (8) of the transponder block to transmit an intermediate-layer add signal thereto, wherein said receiver (1) and transmitter (8) of the transponder block to which the bidirectional client card is connected belong to different transponder pairs and are tuned to a same wavelength of the WDM layer.

14. An optical drop or add-and-drop device (30, 130, 50, 150) in accordance with one of claims 2 to 5 and 10 to 13, wherein a WDM drop link comprises a wideband optical amplifier (34) and a wavelength blocker module (35) arranged to equalize a power spectrum of the optical signals upstream of the optical amplifier.

15. An optical drop or add-and-drop device (30, 130, 50, 150) in accordance with one of claims 2 to 5 and 10 to 14, wherein the optical receivers comprise coherent optical receivers.

16. An optical add, drop or add-and-drop device (30, 13 ,40, 50, 150) in accordance with one of claims 1 to 15, wherein the AWG (6) of the transponder block comprises a cyclic AWG or a noncyclic AWG.

**Patentansprüche**

1. Optische Add- (40) oder Drop- (30, 130) oder Add-Drop-Vorrichtung (50, 150) für ein optisches Netzwerkelement (20, 120, 60, 160), umfassend:

eine Vielzahl von WDM-Verbindungen (9, 31, 41), die jeweils dazu vorgesehen sind, optische Signale auf einer Vielzahl von Wellenlängenkanälen zu übermitteln, und
einen Transponderblock (33, 43, 50), wobei der Transponderblock umfasst:

eine Vielzahl von Transpondern (1, 8), die jeweils dazu vorgesehen sind, ein optisches Signal auf einem ausgewählten Wellenlängenkanal zu erzeugen oder empfangen,
eine optische räumliche Schaltmatrix (3), die eine Vielzahl von mit den Transpondern verbundenen transponderseitigen Ports (4) und eine Vielzahl von AWG-seitigen Ports (5) umfasst, wobei die optische räumliche Schaltmatrix dazu vorgesehen ist, eine Vielzahl von optischen Pfaden als eine Funktion eines Konfigurationszustands zu erzeugen, und
ein Wellenleitergitter (6), wobei das Wellenleitergitter eine Vielzahl von netzwerkseitigen Ports umfasst, die mit der Vielzahl von WDM-Verbindungen (9, 31, 41) verbunden sind, und

eine Vielzahl von matrixseitigen Ports, die mit der Vielzahl von AWG-seitigen Ports (5) verbunden sind, wobei ein Durchlassbereich des Wellenleitergitters zwischen einem netzwerkseitigen Port und einem matrixseitigen Port von einem Rang des netzwerkseitigen Ports und einem Rang des matrixseitigen Ports abhängt, **dadurch gekennzeichnet, dass** die optische räumliche Schaltmatrix konfiguriert werden kann, um transparente optische Pfade zwischen jedem der transponderseitigen Ports, die als eine Funktion des Konfigurationszustands ausgewählt werden, und jedem der AWG-seitigen Ports, die als eine Funktion des Konfigurationszustands ausgewählt werden, zu erzeugen, wobei jeder transparente optische Pfad dazu vorgesehen ist, optische Signale auf der Vielzahl von Wellenlängenkanälen zwischen dem ausgewählten der transponderseitigen Ports und dem ausgewählten der AWG-seitigen Ports zu übermitteln.

2. Optische Drop- oder Add-Drop-Vorrichtung (30, 130, 50, 150) nach Anspruch 1, wobei die Transponder des Transponderblocks optische Empfänger (1) umfassen und die WDM-Verbindungen eine WDM-Drop-Verbindung (31) umfassen, die mit einer WDM-Eingangsleitung (21) des Netzwerkelements verbunden ist.

3. Optische Drop- oder Add-Drop-Vorrichtung nach Anspruch 2, wobei die WDM-Verbindungen eine Vielzahl von WDM-Drop-Verbindungen (31) umfassen, die mit einer entsprechenden Vielzahl von WDM-Eingangsleitungen (21) des Netzwerkelements verbunden sind, sodass optische Signale mit einer gleichen Wellenlänge, die von verschiedenen netzwerkseitigen Ports des Wellenleitergitters (6) von jeweiligen WDM-Drop-Verbindungen empfangen werden, zu verschiedenen matrixseitigen Ports geleitet werden.

4. Optische Drop- oder Add-Drop-Vorrichtung nach Anspruch 3, ferner umfassend eine Vielzahl von programmierbaren Demultiplexern (32, A), die jeweils zwischen einem jeweiligen netzwerkseitigen Port des Wellenleitergitters (6) und der entsprechenden WDM-Eingangsleitung (21) angeordnet sind, wobei jeder programmierbare Demultiplexer dazu vorgesehen ist, eine Vielzahl von optischen Signalen von der WDM-Drop-Verbindung auf einer ausgewählten Vielzahl von Wellenlängenkanälen zu dem netzwerkseitigen Port zu leiten.

5. Optische Drop- oder Add-Drop-Vorrichtung nach Anspruch 4, ferner umfassend eine Vielzahl von Transponderblöcken (33, 50), die jeweils eine Vielzahl von optischen Empfängern, eine optische räumliche Schaltmatrix und ein Wellenleitergitter enthalten, wobei mindestens einer der programmierbaren Demultiplexer (32) eine Vielzahl von Ausgangsports umfasst, die mit netzwerkseitigen AWG-Ports der jeweiligen Transponderblöcke verbunden sind, wobei der programmierbare Demultiplexer dazu vorgesehen ist, eine Vielzahl von optischen Signalen auf einer ausgewählten Vielzahl von Wellenlängenkanälen an jeden der netzwerkseitigen AWG-Ports zu leiten.

6. Optische Add- oder Add-Drop-Vorrichtung (40, 50, 150) nach Anspruch 1, wobei die Transponder des Transponderblocks (43, 50) optische Sender (8) umfassen und die WDM-Verbindungen eine WDM-Add-Verbindung (41) umfassen, die mit einer WDM-Ausgangsleitung (22) des Netzwerkelements verbunden ist.

7. Optische Add- oder Add-Drop-Vorrichtung nach Anspruch 6, wobei die WDM-Verbindungen eine Vielzahl von WDM-Add-Verbindungen (41) umfassen, die mit einer entsprechenden Vielzahl von WDM-Ausgangsleitungen (22) des Netzwerkelements verbunden sind, sodass optische Signale mit einer gleichen Wellenlänge, die von verschiedenen matrixseitigen Ports des Wellenleitergitters von den jeweiligen optischen Sendern empfangen werden, zu verschiedenen netzwerkseitigen Ports und den jeweiligen WDM-Add-Verbindungen geleitet werden.

8. Optische Add- oder Add-Drop-Vorrichtung nach Anspruch 7, ferner umfassend eine Vielzahl von programmierbaren Multiplexern (42, B), die jeweils zwischen einem jeweiligen netzwerkseitigen Port des Wellenleitergitters und der entsprechenden WDM-Ausgangsleitung (22) angeordnet sind, wobei jeder programmierbare Multiplexer dazu vorgesehen ist, eine Vielzahl von optischen Signalen von dem Transponderblock (43) auf einer ausgewählten Vielzahl von Wellenlängenkanälen zu der WDM-Add-Verbindung zu leiten.

9. Optische Add- oder Add-Drop-Vorrichtung nach Anspruch 8, ferner umfassend eine Vielzahl von Transponderblöcken (43), die jeweils eine Vielzahl von optischen Sendern (8), eine optische räumliche Schaltmatrix (3) und ein Wellenleitergitter (6) enthalten, wobei mindestens einer der programmierbaren Multiplexer (42) eine Vielzahl von Eingangsports umfasst, die mit netzwerkseitigen AWG-Ports der jeweiligen Transponderblöcke verbunden sind, wobei der programmierbare Multiplexer dazu vorgesehen ist, eine Vielzahl von optischen Signalen von jedem jeweiligen Transponderblock auf einer ausgewählten Vielzahl von Wellenlängenkanälen an die WDM-Add-Verbindung zu leiten.

10. Optische Add-Drop-Vorrichtung (50, 150) nach Anspruch 1, wobei die WDM-Verbindungen eine WDM-Drop-Verbindung (31), die einen netzwerkseitigen Eingangsport (52) des AWG mit einer WDM-Eingangsleitung (21) des Netzwerkelements verbindet, und eine WDM-Add-Verbindung (41), die einen netzwerkseitigen Ausgangsport (53) des AWG mit einer WDM-Ausgangsleitung (22) des Netzwerkelements verbindet, umfassen,
wobei die Transponder des Transponderblocks eine Vielzahl von Transponderpaaren umfassen, die mit entsprechenden transponderseitigen Ports der optischen räumlichen Schaltmatrix verbunden sind, wobei jedes Transponderpaar einen optischen Sender (8), einen optischen Empfänger (1) und eine richtungsabhängige optische Komponente (51, 54) umfasst, die dazu vorgesehen sind, um ein optisches Signal, das zu der optischen räumlichen Schaltmatrix übertragen wird, von einem optischen Signal zu trennen, das von der optischen räumlichen Schaltmatrix empfangen wird,
und wobei der optische Sender und der optische Empfänger eines Paars auf unterschiedliche Wellenlängenkanäle abgestimmt sind.

11. Optische Add-Drop-Vorrichtung nach Anspruch 10, wobei die WDM-Verbindungen eine Vielzahl von WDM-Drop-Verbindungen (31) umfassen, die mit einer entsprechenden Vielzahl von WDM-Eingangsleitungen des Netzwerkelements verbunden sind, wobei die optische Add-Drop-Vorrichtung ferner einen programmierbaren Multiplexer (55) umfasst, der zwischen dem netzwerkseitigen Eingangsport (52) des Wellenleitergitters und den WDM-Drop-Verbindungen (31) angeordnet ist und dazu vorgesehen ist, um eine Vielzahl von optischen Signalen von jeder der WDM-Drop-Verbindungen auf einer ausgewählten Vielzahl von Wellenlängenkanälen zu dem netzwerkseitigen Eingangsport zu leiten.

12. Optische Add-Drop-Vorrichtung nach einem der Ansprüche 10 bis 11, wobei die richtungsabhängige optische Komponente aus einer Gruppe ausgewählt wird, die optische Zirkulatoren (51) und optische Isolatoren umfasst.

13. Optische Add-Drop-Vorrichtung nach einem der Ansprüche 10 bis 12, ferner umfassend eine bidirektionale Client-Karte (71), die einen Zwischenschichtempfänger (72), der mit einem Empfänger des Transponderblocks (50) verbunden ist, um ein Zwischenschicht-Drop-Signal zu empfangen, und einen Zwischenschichtsender (73), der mit einem Sender (8) des Transponderblocks verbunden ist, um ein Zwischenschicht-Add-Signal an diesen zu übertragen, umfasst, wobei der Empfänger (1) und der Sender (8) des Transponderblocks, mit dem die bidirektionale Client-Karte verbunden ist, zu verschiedenen Transponderpaaren gehören und auf eine gleiche Wellenlänge der WDM-Schicht abgestimmt sind.

14. Optische Drop- oder Add-Drop-Vorrichtung (30, 130, 50, 150) nach einem der Ansprüche 2 bis 5 und 10 bis 13, wobei eine WDM-Drop-Verbindung einen optischen Breitbandverstärker (34) und ein Wellenlängenblocker-Modul (35) umfasst, die dazu vorgesehen sind, um ein Leistungsspektrum der optischen Signale stromaufwärts von dem optischen Verstärkers anzugleichen.

15. Optische Drop- oder Add-Drop-Vorrichtung (30, 130, 50, 150) nach einem der Ansprüche 2 bis 5 und 10 bis 14, wobei die optischen Empfänger kohärente optische Empfänger umfassen.

16. Optische Add-, Drop- oder Add-Drop-Vorrichtung (30, 13 ,40, 50, 150) nach einem der Ansprüche 1 bis 15, wobei das AWG (6) des Transponderblocks ein zyklisches AWG oder ein nicht zyklisches AWG umfasst.


**Revendications**

1. Dispositif optique d'insertion (40) ou d'extraction (30, 130) ou d'insertion-extraction (50, 150) pour un élément de réseau optique (20, 120, 60, 160), comprenant :

   une pluralité de liaisons WDM (9, 31, 41), chacune adaptée pour transporter des signaux optiques sur une pluralité de canaux de longueur d'onde, et
   un bloc transpondeur (33, 43, 50), le bloc transpondeur comprenant :

   une pluralité de transpondeurs (1, 8), chacun adapté pour générer ou recevoir un signal optique sur un canal de longueur d'onde sélectionné,
   une matrice de commutation spatiale optique (3) comprenant une pluralité de ports côté transpondeur (4) reliés aux transpondeurs et une pluralité de ports côté AWG (5), la matrice de commutation spatiale optique étant adaptée pour produire une pluralité de chemins optiques en fonction d'un état de configuration, et

   un réseau sélectif planaire (6), le réseau sélectif planaire comprenant

   une pluralité de ports côté réseau reliés à la pluralité de liaisons WDM (9, 31, 41), et
   une pluralité de ports côté matrice reliés à la pluralité de ports côté AWG (5),

   dans lequel une bande passante du réseau sélectif planaire entre un port côté réseau et un port côté matrice dépend d'un rang du port côté réseau et d'un rang du port côté matrice,
   **caractérisé en ce que** la matrice de commutation spatiale optique peut être configurée pour générer des chemins optiques transparents entre l'un quelconque des ports côté transpondeur sélectionné en fonction de l'état de configuration, et l'un quelconque des ports côté AWG sélectionné en fonction de l'état de configuration, chaque chemin optique transparent étant adapté pour transporter des signaux optiques sur la pluralité de canaux de longueur d'onde entre le port sélectionné parmi les ports côté transpondeur et le port sélectionné parmi les ports côté AWG.

2. Dispositif optique d'extraction ou d'insertion-extraction (30, 130, 50, 150) selon la revendication 1, dans lequel les transpondeurs du bloc transpondeur comprennent des récepteurs optiques (1) et les liaisons WDM comprennent une liaison WDM d'extraction (31) reliée à une ligne WDM d'entrée (21) de l'élément de réseau.

3. Dispositif optique d'extraction ou d'insertion-extraction selon la revendication 2, dans lequel les liaisons WDM comprennent une pluralité de liaisons WDM d'extraction (31) reliées à une pluralité correspondante de lignes WDM d'entrée (21) de l'élément de réseau, de telle sorte que des signaux optiques ayant une même longueur d'onde qui sont reçus par différents ports côté réseau du réseau sélectif planaire (6) depuis des liaisons WDM d'extraction respectives sont transférés à différents ports côté matrice.

4. Dispositif optique d'extraction ou d'insertion-extraction selon la revendication 3, comprenant en outre une pluralité de démultiplexeurs programmables (32, A), chacun disposé entre un port côté réseau respectif du réseau sélectif planaire (6) et la ligne WDM d'entrée correspondante (21), chaque démultiplexeur programmable étant adapté pour transférer au port côté réseau une pluralité de signaux optiques provenant de la liaison WDM d'extraction sur une pluralité sélectionnée de canaux de longueur d'onde.

5. Dispositif optique d'extraction ou d'insertion-extraction selon la revendication 4, comprenant en outre une pluralité de blocs transpondeurs (33, 50), chacun comportant une pluralité de récepteurs optiques, une matrice de commutation spatiale optique et un réseau sélectif planaire, dans lequel au moins un des démultiplexeurs programmables (32) comprend une pluralité de ports de sortie reliés à des ports AWG côté réseau de blocs transpondeurs respectifs, le démultiplexeur programmable étant adapté pour transférer à chaque dit port AWG côté réseau une pluralité de signaux optiques sur une pluralité sélectionnée de canaux de longueur d'onde.

6. Dispositif optique d'extraction ou d'insertion-extraction (40, 50, 150) selon la revendication 1, dans lequel les transpondeurs du bloc transpondeur (43, 50) comprennent des émetteurs optiques (8) et les liaisons WDM comprennent une liaison WDM d'insertion (41) reliée à une ligne WDM de sortie (22) de l'élément de réseau.

7. Dispositif optique d'extraction ou d'insertion-extraction selon la revendication 6, dans lequel les liaisons WDM comprennent une pluralité de liaisons WDM d'insertion (41) reliées à une pluralité correspondante de lignes WDM de sortie (22) de l'élément de réseau, de telle sorte que des signaux optiques ayant une même longueur d'onde qui sont reçus par différents ports côté matrice du réseau sélectif planaire depuis des émetteurs optiques respectifs sont transférés à différents ports côté réseau et aux liaisons WDM d'insertion respectives.

8. Dispositif optique d'extraction ou d'insertion-extraction selon la revendication 7, comprenant en outre une pluralité de multiplexeurs programmables (42, B), chacun disposé entre un port côté réseau respectif du réseau sélectif planaire et la ligne WDM de sortie correspondante (22), chaque multiplexeur programmable étant adapté pour transférer à la liaison WDM d'insertion une pluralité de signaux optiques provenant du bloc transpondeur (43) sur une pluralité sélectionnée de canaux de longueur d'onde.

9. Dispositif optique d'extraction ou d'insertion-extraction selon la revendication 8, comprenant en outre une pluralité de blocs transpondeurs (43), chacun comportant une pluralité d'émetteurs optiques (8), une matrice de commutation spatiale optique (3) et un réseau sélectif planaire (6), dans lequel au moins un des multiplexeurs programmables (42) comprend une pluralité de ports d'entrée reliés à des ports AWG côté réseau de blocs transpondeurs respectifs, le multiplexeur programmable étant adapté pour transférer à la liaison WDM d'insertion une pluralité de signaux optiques provenant de chaque dit bloc transpondeur respectif sur une pluralité sélectionnée de canaux de longueur d'onde.

10. Dispositif d'insertion-extraction optique (50, 150) selon la revendication 1, dans lequel les liaisons WDM comprennent une liaison WDM d'extraction (31) reliant un port d'entrée côté réseau (52) de l'AWG à une ligne WDM d'entrée (21) de l'élément de réseau et une liaison WDM d'insertion (41) reliant un port de sortie côté réseau (53) de l'AWG à une ligne WDM de sortie (22) de l'élément de réseau, dans lequel les transpondeurs du bloc transpondeur comprennent une pluralité de paires de transpondeurs reliées à des ports côté transpondeur respectifs de la matrice de commutation spatiale optique, chaque paire de transpondeurs comportant un émetteur optique (8), un récepteur optique (1) et un composant optique directionnel (51, 54) agencé pour séparer un signal optique transmis à la matrice de commutation spatiale optique d'un signal optique reçu depuis la matrice de commutation spatiale optique, et dans lequel l'émetteur optique et le récepteur optique d'une paire sont réglés sur différents canaux de longueur d'onde.

11. Dispositif optique d'insertion-extraction selon la revendication 10, dans lequel les liaisons WDM comprennent une pluralité de liaisons WDM d'extraction (31) reliée à une pluralité correspondante de lignes WDM d'entrée de l'élément de réseau, le dispositif optique d'insertion-extraction comprenant en outre un multiplexeur programmable (55) disposé entre le port d'entrée côté réseau (52) du réseau sélectif planaire et les liaisons WDM d'extraction (31) et adapté pour transférer au port d'entrée côté réseau une pluralité de signaux optiques provenant de chaque dite liaison WDM d'extraction sur une pluralité sélectionnée de canaux de longueur d'onde.

12. Dispositif optique d'insertion-extraction selon la revendication 10, dans lequel le composant optique directionnelle est choisie dans un groupe comprenant des circulateurs optiques (41) et des isolateurs optiques.

13. Dispositif optique d'insertion-extraction selon une des revendications 10 à 12, comprenant en outre une carte client bidirectionnelle (71) comprenant un récepteur de couche intermédiaire (72) relié à un récepteur du bloc transpondeur (50) pour recevoir un signal d'extraction de couche intermédiaire et un émetteur de couche intermédiaire (73) relié à un émetteur (8) du bloc transpondeur pour lui transmettre un signal d'insertion de couche intermédiaire, dans lequel lesdits récepteur (1) et émetteur (8) du bloc transpondeur auquel est reliée la carte client bidirectionnelle appartiennent à différentes paires de transpondeurs et sont réglés sur une même longueur d'onde de la couche WDM.

14. Dispositif optique d'extraction ou d'insertion-extraction (30, 130, 50, 150) selon une des revendications 2 à 5 et 10 à 13, dans lequel une liaison WDM d'extraction comprend un amplificateur optique à large bande (34) et un module de blocage de longueur d'onde (35) agencé pour égaliser un spectre de puissance des signaux optiques en amont de l'amplificateur optique.

15. Dispositif optique d'extraction ou d'insertion-extraction (30, 130, 50, 150) selon une des revendications 2 à 5 et 10 à 14, dans lequel les récepteurs optiques comprennent des récepteurs optiques cohérents.

16. Dispositif optique d'insertion, d'extraction ou d'insertion-extraction (30, 13 ,40, 50, 150) selon une des revendications 1 à 15, dans lequel l'AWG (6) du bloc transpondeur comprend un AWG cyclique ou un AWG non cyclique.

FIG. 1

FIG. 2

FIG. 3

**FIG. 4**

**FIG. 5**

**FIG. 6**

**FIG. 7**

*150* *150*

Multidirectional blocks

Multidirectional blocks

**FIG. 8**

optical spatial switching matrix

Client side

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5930016 A, BRORSON STUART DOUGLAS
- US 2002015551 A1, TSUYAMA ISAO
- EP 1657953 A2

**Non-patent literature cited in the description**

- **J. GRIPP.** *Journal of Lightwave Technology,* 2003, vol. 21 (11), 2840-2842